# EUROPEAN PATENT APPLICATION

(11) **EP 4 328 204 A1**
(43) Date of publication of application: **28.02.2024**
(21) Application number: 22791685.5
(22) Date of filing: 15.04.2022
(51) Int. Cl.: C03C 27/12, B60J 1/00

(54) **LAMINATED GLASS FOR AUTOMOBILE WINDOW, AND AUTOMOBILE**

(30) Priority: 20.04.2021 JP 2021071144
(71) Applicant: AGC INC., Chiyoda-ku, Tokyo 1008405 (JP)
(72) Inventor: YAMAKAWA, Hiroshi, Tokyo 100-8405 (JP); FUKAMI, Masao, Tokyo 100-8405 (JP); OHBA, Yoshiaki, Tokyo 100-8405 (JP); TAKABAYASHI, Toru, Tokyo 100-8405 (JP); MINAMIYA, Yuukou, Tokyo 100-8405 (JP)
(74) Representative: Müller-Boré & Partner Patentanwälte PartG mbB
(86) International application number: PCT/JP2022/017960
(87) International publication number: WO 2022/224911

(57) **Abstract**

Laminated glass includes a first-glass plate; an interlayer film; and a second-glass plate in this order from a vehicle-exterior side to a vehicle-interior side. A light-shielding layer formed by baking a dark pigment and glass powder and a baked layer formed by baking metal powder and glass powder are stacked in this order on a vehicle-interior side surface of either the first-glass plate or the second-glass plate. The light-shielding layer is provided along a peripheral edge of either the first-glass plate or the second-glass plate. The first-glass plate or the second-glass plate includes a first-region in which plane-compressive stress is generated, a second-region in which plane-tensile stress is generated, and a third-region in which plane-compressive stress is generated in this order from the peripheral edge toward an inner side. The baked layer is provided so as to be stacked in at least one of the first-region or the third-region.

## Description

### TECHNICAL FIELD

The disclosures herein relate to laminated glass for automobile windows and relate to an automobile.

### BACKGROUND ART

There is demand for techniques that reduce the impact on a person such as a pedestrian at the time of collision between an automobile and the person. For example, Patent Document 1 discloses a technique in which, when an impact is applied to the surroundings of a cowl louver and a windshield glass, the rear end portion of a cowl louver and the front end portion of windshield glass that are connected to each other by molding become separated, thereby reducing the impact on the person.

Patent Document 2 discloses a technique in which an antenna is provided on window glass of a vehicle. Patent Document 3 discloses a technique in which heating wire is provided on window glass of a vehicle. The antenna and heating wire are formed by applying a paste to a glass plate and baking the glass plate to which the paste is applied. The paste includes silver powder, for example.

### RELATED-ART DOCUMENTS

### PATENT DOCUMENTS

Patent Document 1: Unexamined Japanese
Patent Application Publication No. 2017-213928
Patent Document 2: Japanese Patent No. 5516576
Patent Document 3: Japanese Patent No. 5585440

### SUMMARY OF THE INVENTION

### PROBLEM TO BE SOLVED BY THE INVENTION

There is demand for laminated glass for automobile windows such as a windshield to break appropriately at the time of a collision between an automobile and a person such as a pedestrian to reduce the impact on the person. For example, there is demand for laminated glass for automobile windows to have a Head Injury Criterion: HIC that is less than or equal to a desired value. At the same time, there is demand for the laminated glass for automobile windows to have an appropriate durability from the standpoint of durability.

According to one aspect of the present disclosure, a technique is provided that obtains an appropriate durability while also reducing the impact on a person at the time of a collision between an automobile and the person.

### MEANS TO SOLVE THE PROBLEM

According to one aspect of the present disclosure, laminated glass for automobile windows includes a first glass plate; an interlayer film; and a second glass plate in this order from a vehicle-exterior side to a vehicle-interior side. A light-shielding layer formed by baking a dark pigment and glass powder and a baked layer formed by baking metal powder and glass powder are stacked in this order on a vehicle-interior side surface of either the first glass plate or the second glass plate. The light-shielding layer is provided along a peripheral edge of either the first glass plate or the second glass plate. The first glass plate or the second glass plate includes a first region in which plane compressive stress is generated, a second region in which plane tensile stress is generated, and a third region in which plane compressive stress is generated in this order from the peripheral edge toward an inner side. The baked layer is provided so as to be stacked in at least one of the first region or the third region.

### Effects of the Invention

According to one aspect of the present disclosure, an appropriate durability can be obtained while also reducing an impact on a person at the time of a collision between an automobile and the person.

### BRIEF DESCRIPTION OF THE DRAWINGS

[FIG. 1] FIG. 1 is a front view of an automobile provided with laminated glass according to an embodiment;
[FIG. 2] FIG. 2 is a cross-sectional view of a portion of the laminated glass according to the embodiment;
[FIG. 3] FIG. 3 is a diagram illustrating an example of a plane stress distribution that occurs during the cooling process after the glass plates are bend formed;
[FIG. 4] FIG. 4 is a diagram illustrating an example of a light-shielding layer and a baked layer that are provided on a second surface;
[FIG. 5] FIG. 5 is a diagram illustrating an example of a light-shielding layer and a baked layer that are provided on a fourth surface;
[FIG. 6] FIG. 6 is a diagram illustrating a first example of an arrangement pattern of the light-shielding layer and the baked surface that are provided on the fourth surface;
[FIG. 7] FIG. 7 is a diagram illustrating a second example of the arrangement pattern of the light-shielding layer and the baked layer that are provided on the fourth surface;
[FIG. 8] FIG. 8 is a diagram illustrating a third example of the arrangement pattern of the light-shielding layer and the baked layer that are provided on the fourth surface;
[FIG. 9] FIG. 9 is a diagram illustrating a fourth example of the arrangement pattern of the light-shielding layer and the baked layer that are provided on the fourth surface;
[FIG. 10] FIG. 10 is a diagram illustrating a fifth example of the arrangement pattern of the light-shielding layer and the baked layer that are provided on the fourth surface; and
[FIG. 11] FIG. 11 is a diagram illustrating a sixth example of the arrangement pattern of the light-shielding layer and the baked layer that are provided on the fourth surface.

### DESCRIPTION OF THE PREFERRED EMBODIMENT

Next, embodiments of the present disclosure are described with reference to the drawings. Throughout the drawings, the same components will be denoted by the same reference numeral, and duplicate descriptions may be omitted. Also, in this specification, numerical ranges expressed using "to" include the lower limit value and the upper limit value before and after the "to".

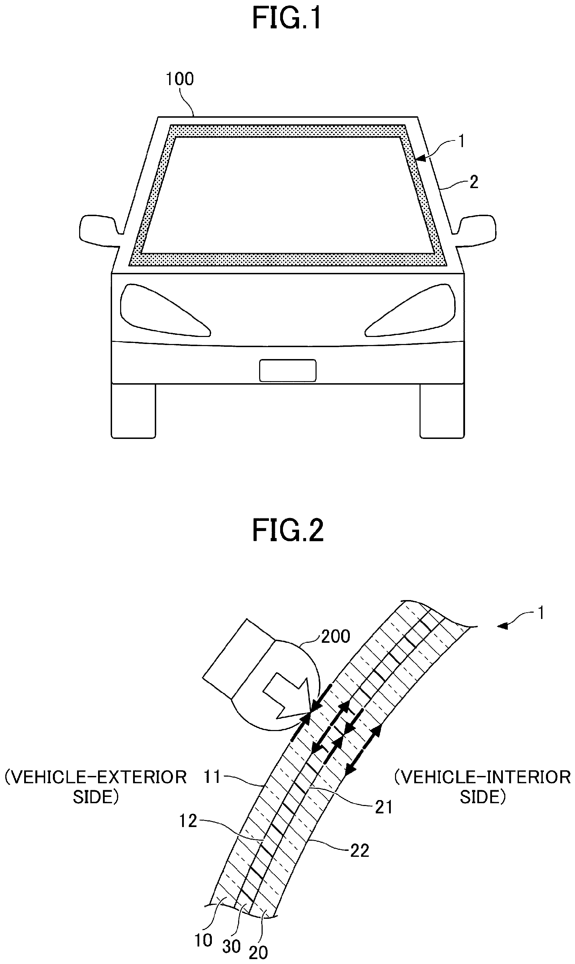

As illustrated in FIG. 1, an automobile 100 includes laminated glass for automobile windows 1 and a vehicle body 2 having an opening portion to which the automobile window laminated glass 1 is attached. Hereinafter, the laminated glass for automobile windows 1 is referred to simply as the laminated glass 1. The laminated glass 1 is, for example, a windshield but the laminated glass 1 can also be window glass other than the windshield, examples of which include, side glass, rear glass, and roof glass.

As illustrated in FIG. 2, the laminated glass 1 includes a first glass plate 10, an interlayer film 30, and a second glass plate 20 in this order from a vehicle-exterior side toward a vehicle-interior side. The interlayer film 30 bonds the first glass plate 10 and the second glass plate 20 together. The first glass plate 10 has a first surface 11 that is a vehicle-exterior side surface and a second surface 12 that is a vehicle-interior side surface. The second glass plate 20 has a third surface 21 that is a vehicle-exterior side surface and a fourth surface 22 that is a vehicle-interior side surface.

The first glass plate 10 and the second glass plate 20 may have the same material or may have material different from each other. Preferably, the material of the first glass plate 10 and the second glass plate 20 is inorganic glass. Examples of the inorganic glass include soda lime silicate glass, aluminosilicate glass, borate glass, lithium aluminosilicate glass, and borosilicate glass. The method for forming the inorganic glass into a plate shape is not particularly limited. Examples of the method include the float method.

The first glass plate 10 and the second glass plate 20 may be non-tempered glass (float glass). The non-tempered glass is glass obtained by shaping molten glass into a plate shape and annealing the glass, yet is not subjected to tempering treatment such as air-cooling tempering treatment or chemical tempering treatment. The non-tempered glass is unlikely to form reticular shaped or cobweb shaped fine cracks when the non-tempered glass breaks when sustaining an impact.

The thickness of first glass plate 10 and the thickness of the second glass plate 20 may be the same or may be different from each other. The thickness of the first glass plate 10 may be 1.1 mm or more and 3.5 mm or less. Also, the thickness of the second glass plate 20 may be 0.5 mm or more and 2.3 mm or less. Further, the total thickness of the laminated glass 1 may be 2.3 mm or more and 8.0 mm or less.

The material of the interlayer film 30 is not particularly limited but preferably is a thermoplastic resin. Examples of the material of the interlayer film 30 include thermoplastic resins conventionally used for the same purpose, such as plasticized polyvinyl acetal resins, plasticized polyvinyl chloride resins, saturated polyester resins, plasticized saturated polyester resins, polyurethane resins, plasticized polyurethane resins, ethylene-vinyl acetate copolymer resins, ethylene-ethyl acrylate copolymer resins, cycloolefin polymer resins, and ionomer resins. Further, resin compositions containing a modified hydrogenated block copolymer described in Japanese Patent No. 6065221 can also be suitably used. Among them, plasticized polyvinyl acetal resins are considered to be a suitable material because they have an excellent balance of various characteristics such as transparency, weather resistance, strength, adhesiveness, penetration resistance, impact energy absorption, moisture resistance, heat insulation, and sound insulation. The above thermoplastic resins may be used alone or two or more of these thermoplastic resins may be used in combination. "Plasticized" in the plasticized polyvinyl acetal resin means that the resin is plasticized by the addition of a plasticizer. The same applies to other plasticized resins.

The material of the interlayer film 30 may be a resin not containing a plasticizer, for example, an ethylene-vinyl acetate copolymer resin. Examples of the above-described polyvinyl acetal resin include a polyvinyl formal resin obtained by reacting polyvinyl alcohol (PVA) with formaldehyde, a narrowly defined polyvinyl acetal resin obtained by reacting PVA with acetaldehyde, and a polyvinyl butyral resin (PVB) obtained by reacting PVA with n-butyraldehyde. In particular, PVB is considered to be a suitable material because it has an excellent balance of various characteristics such as transparency, weather resistance, strength, adhesiveness, penetration resistance, impact energy absorption, moisture resistance, heat insulation, and sound insulation. The above-mentioned resins may be used alone or two or more of these resins may be used in combination.

The interlayer film 30 may be a single-layer structure or a multi-layer structure. The interlayer film 30 may have functions other than adhesion. For example, the interlayer film 30 may include one or more selected from a sound insulation layer, a colored transparent layer, an ultraviolet cut layer, and an infrared cut layer.

The thickness of the interlayer film 30 is 0.5 mm or more from the standpoint of adhesiveness. Also, the thickness of the interlayer film 30 is 3 mm or less from the standpoint of reduction of weight and handleability. The thickness of the interlayer film 30 may be constant or may vary depending on the position. For example, in a case where an image of a head-up display is projected onto the laminated glass 1, the thickness of the interlayer film 30 increases from the lower side to the upper side in order to suppress an occurrence of a double image. The interlayer film 30 is formed in a shape of a wedge, and a wedge angle is, for example, 1.0 mrad or less.

The method for producing the laminated glass 1 includes, for example, the following steps (A) to (C). (A) A laminate is fabricated by stacking the first glass plate 10 on the second glass plate 20 via the interlayer film 30. (B) The laminate is put inside a rubber bag and the rubber bag is heated while depressurizing the inside of the rubber bag, thereby causing the first glass plate 10 and the second glass plate 20 to adhere to the interlayer film 30. The pressure inside the rubber bag is, for example, -100 kPa to -65 kPA relative to the atmospheric pressure. The heating temperature of the rubber bag is, for example, 70°C to 110°C. (C) The laminate is removed from the rubber bag and heated at a temperature of 100°C to 150°C, thereby causing the pressure bonding at a pressure of 0.6 MPa to 1.3 MPa. For the pressure bonding, an autoclave is be used, for example. The method for producing the laminated glass 1 may be a typical method, and thus the aforementioned step (C) may be omitted.

As illustrated in FIG. 2, the laminated glass 1, for example, may be entirely or partially curved so as to be convex on the vehicle-exterior side. Although the laminated glass 1 is a multi-curved glass such that the shape is curved in both the forward-rearward direction and the vertical direction of the vehicle, the laminated glass 1 may be a single-curved glass such that the shape is curved only in either the forward-rearward direction or the vertical direction. The radius of curvature of the laminated glass 1 is, for example, 200 mm or more and 300,000 mm or less.

The first glass plate 10 and the second glass plate 20 are bend formed before the aforementioned step (A). The bend forming is performed with the glass in a heat-induced softened state. The temperature at which glass is heated at the time of bend forming is, for example, 550°C to 700°C. The first glass plate 10 and the second glass plate 20 may be bend formed separately or may be stacked and bend formed at the same time. The bend forming includes, for example, gravity forming, press forming, or a combination thereof.

The glass plates 10 and 20 are heated at the time of bend forming and then cooled. The peripheral edges of the glass plates 10 and 20 tend to cool more quickly than the center of the glass plates 10 and 20. As a result, compressive stress occurs on the peripheral edges of the glass plates 10 and 20. Also, tensile stress that balances the compressive stress occurs.

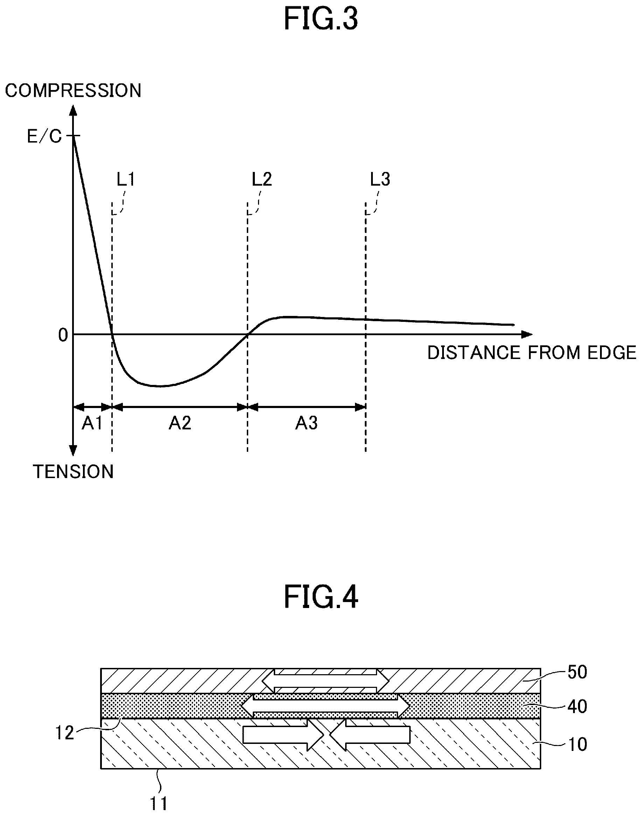

FIG. 3 is a diagram illustrating an example of a plane stress distribution that occurs during the cooling process after the glass plates 10 and 20 are bend formed. In the present specification, the term "plane stress" is plane stress that is measured by using a photoelasticity technique, and means a value obtained by integrating a difference (principal stress difference) between principal stresses anisotropically acting in plane directions (directions perpendicular to a plate thickness direction) over the plate thickness direction.

The plane stress of the glass plates 10 and 20 are measured by, for example, an AGES-Meter manufactured by Orihara Industrial Co., Ltd. The plane stress of the glass plates 10 and 20 are measured after the bending forming of the glass plates 10 and 20. As described further below, there is a case where the light-shielding layer 40 and the baked layer 50 are fused together with the glass plates 10 and 20 at the timing of bending forming or before bend forming. In such a case, the plane stress is measured in a state where the light-shielding layer 40 and the baked layer 50 are fused with the glass plates 10 and 20.

The glass plates 10 and 20 include a first region A1 in which plane compressive stress is generated, a second region A2 in which plane tensile stress is generated, and third region A3 in which plane compressive stress is generated in this order from the respective peripheral edges of the glass sheets 10 and 20 toward the respective inner sides. The width of the first region A1 is, for example, 5 mm to 15 mm. The width of the second region is A2, for example, 20 mm to 50 mm.

In FIG. 3, the broken line L1 indicates the boundary between the first region A1 and the second region A2, whereas the broken line L2 indicates the boundary between the second region A2 and the third region A3. Further, in FIG. 3, the broken line L3 indicates the boundary between the light-shielding region and the transparent region. The light shielding region is a region that is covered by the light-shielding layer 40 described further below. The transparent region is a region through which the outside of the automobile 100 can be seen by the occupants of the automobile 100.

The plane compressive stress in the peripheral edges of the glass plates 10 and 20 are referred to as edge compression also known as E/C. Typically, press-formed glass plates 10 and 20 tend to have a high E/C compared to gravity-formed glass plates 10 and 20.

In the case where the glass plates 10 and 20 are press formed, the E/C is, for example, 20 MPa or more and 60 MPa or less, and preferably 20 MPa or more and 40 MPa or less. Press forming is typically performed one plate at a time.

In contrast to this, in the case where the glass plates 10 and 20 are gravity formed, the E/C is, for example, 8 MPa or more and less than 20 MPa, and preferably 10 MPa or more and 15 MPa or less. Although gravity forming is typically performed by stacking the glass plate 10 and 20, the gravity forming may be performed one plate at a time.

There is demand for the laminated glass 1 to break appropriately at the time of a collision between the automobile 100 and a person 200 such as a pedestrian to reduce the impact on the person 200, as illustrated in FIG. 2. For example, there is demand for the laminated glass 1 to have a Head Injury Criterion: HIC that is less than or equal to a desired value (for example, 1,000 or less, preferably 650 or less). At the same time, there is demand for the laminated glass 1 to have an appropriate strength from the standpoint of usefulness and durability.

At the time of collision between the automobile 100 and the person 200, the laminated glass 1 gets pushed from the vehicle-exterior side toward the vehicle-interior side. As a result, tensile stress forms on the second surface 12 that is the vehicle-interior side surface of the first glass plate 10, and thus the second glass plate 20 breaks starting where the defect is on the second surface 12. Also, tensile stress forms on the fourth surface 22 that is the vehicle-interior side surface of the second glass plate 20, and thus the second glass plate 20 breaks starting where the defect is on the fourth surface 22. In both the first glass plate 10 and the second glass plate 20, cracking extends from the vehicle-interior side to the vehicle-exterior side.

In order to reduce the HIC of the laminated glass 1, it is ideal to reduce the strength of the glass plates 10 and 20 at the collision point between the laminated glass 1 and the person 200. However, the strength of the glass plates 10 and 20 varies, and consequently the glass plates 10 and 20 might not break at the collision point. In such a case, impact stress propagates from the collision point of the glass plates 10 and 20 to the respective peripheral edges. There is demand for the first glass plates 10 and 20 to break in a case where the impact stress reaches the peripheral edges of the glass plates 10 and 20. At the same time, there is demand for the peripheral edges of the glass plates 10 and 20 to have an appropriate strength from the standpoint of durability.

According to one aspect of the present disclosure, the strength of the first glass plate 10 can be adjusted to an appropriate value by stacking the light-shielding layer 40 and the baked layer 50 in this order on the peripheral edge of the second surface 12 of the first glass plate 10, as illustrated in FIG. 4. The strength of the first glass plate 10 is reduced by the light-shielding layer 40 and further reduced by the baked layer 50.

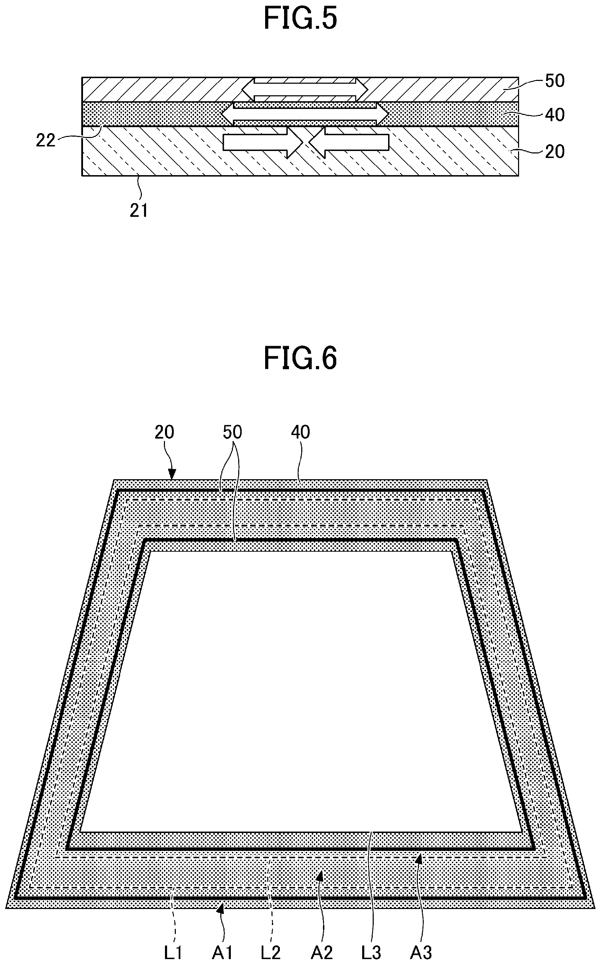

According to another aspect of the present disclosure, the strength of the second glass plate 20 can be adjusted to an appropriate value by stacking the light-shielding layer 40 and the baked layer 50 in this order on the peripheral edge of the fourth surface 22 of the second glass plate 20, as illustrated in FIG. 5. The strength of the second glass plate 20 is reduced by the light-shielding layer 40 and further reduced by the baked layer 50.

Next, a case where the light-shielding layer 40 and the baked layer 50 are formed on the fourth layer 22 of the second glass plate 20 is described. In the case where light-shielding layer 40 and the baked layer 50 are formed on the second surface 12 of the first glass plate 10, the description is the same so description thereof is omitted. It is to be noted that it is sufficient as long as the light-shielding layer 40 and the baked layer 50 are formed on at least one of the second surface 12 or the fourth surface 22.

The light-shielding layer 40 is formed by baking a dark pigment and glass powder. More specifically, the light-shielding layer 40 is formed by applying a paste containing both the dark pigment and the glass powder, and baking the paste. The color of the dark pigment may be brown, gray, reddish brown, or the like. The paste application method is not particularly limited, and may be, for example, screen printing.

The light-shielding layer 40 is formed on the peripheral edge of the fourth surface 22 of the second glass plate 20. For example, the light-shielding layer 40 is formed in an area from the peripheral edge of the fourth surface 22 to a position 10 mm or more and 300 mm or less from the peripheral edge (see FIG. 6). The light-shielding layer 40 inhibits deterioration of the adhesive adhering the laminated glass 1 to the vehicle body 2. The adhesive, is, for example urethane.

Although the light-shielding layer 40 is baked at the time when bend forming of the second glass plate 20 is performed in order to shorten the time it takes to produce the laminated glass 1, the light-shielding layer 40 may instead be performed before the bending forming of the second glass plate 20 is performed. In either case, the glass powder contained in the light-shielding layer 40 joins with the second glass plate 20, thereby fusing the light-shielding layer 40 with the second glass plate 20.

When the light-shielding layer 40 and the second glass 20 are fused together, tensile stress is generated in the light-shielding layer 40 with respect to the compressive stress that is generated in the second glass plate 20 as illustrated by the arrows in FIG. 5. These types of stress are generated because the physical properties of the light-shielding layer 40 are the second glass plate 20 are different from each other. The linear expansion coefficient is one example of the main physical properties.

The linear expansion coefficient α1 of the light-shielding layer 40 is greater than the linear expansion coefficient α0 of the second glass plate 20 (α1 > α0). The cooling process after baking causes the light-shielding layer 40 to contract substantially more than the second glass plate 20. As a result, compressive stress is generated in the second glass plate 20, whereas tensile stress is generated in the light-shielding layer 40, as indicated by the arrows in FIG. 5.

α0 and α1 are the average linear expansion coefficients at a temperature of 20°C to 350°C. α0 is, for example, 8.5 × 10⁻⁶ / °C to 9.0 × 10⁻⁶ / °C. α1 is, for example, 9.2 × 10⁻⁶ / °C to 10.0 × 10⁻⁶ / °C, and preferably 9.4 × 10⁻⁶ / °C to 9.8 × 10⁻⁶ / °C.

When tensile stress is generated in advance in the light-shielding layer 40, cracks tend to form in the light-shielding layer 40 at the time of collision between the automobile 100 and the person 200. The formed crack progresses through the light-shielding layer 40 and progresses beyond the fourth layer 22 of the second glass plate 20 to which the light-shielding layer 40 has been fused. It is easier for cracks to spread rather than to be formed. Therefore, the second glass plate 20 readily breaks.

The fact that the surface roughness of the light-shielding layer 40 is greater than the surface roughness of the second glass plate 20 is another factor that contributes to light-shielding layer 40 reducing the strength of the second glass plate 20. When the glass powder is heated, the glass powder bonds together, resulting in a multi-porous structure. Therefore, the surface roughness of the baked layer 50 is greater than the surface roughness of the second glass plate 20.

In the present specification, the surface roughness is an arithmetic average roughness defined by Japanese Industrial Standards (JIS B 0601:2013), and is measured by using, for example, a non-contact three-dimensional measurement instrument (model: NH-3MAS) manufactured by Mitaka Kohki Co., Ltd. The surface roughness of the light-shielding layer 40 is, for example, 400 nm to 800 nm, and preferably 600 nm to 800 nm. In contrast to this, the surface roughness of the second glass plate 20 is, for example, 5 nm to 15 nm, and preferably 5 nm to 10 nm.

Since the surface roughness of the light-shielding layer 40 is greater than the surface roughness of the second glass plate 20, large defects get formed on the fourth surface 22 upon the forming of the light-shielding layer 40 on the fourth surface 22 of the second glass plate 20. When the defects are large, stress tends to concentrate, and thus cracks readily form. Therefore, the second glass plate 20 readily breaks.

The baked layer 50 is formed by baking metal powder and glass powder. More specifically, the baked layer 50 is formed by applying a paste containing both the metal powder and the glass powder, and baking the paste. The metal powder is, for example, silver powder. The metal powder is not limited to silver powder, and may be copper powder, for example. The paste application method is not particularly limited, and may for example, screen printing.

The baked layer 50 has conductivity. It is to be noted that the baked layer 50 is not a heater or an antenna, does not supply power, and is not grounded. Also, the baked layer 50 is not electrically connected to the vehicle body 2 or an electrical device provided on the vehicle body 2 as the ground (GND).

The baked layer 50 is preferably baked at the same time as the light-shielding layer 40 in order to shorten the time it takes to produce the laminated glass 1. Since the baked layer 50 contains glass powder like the light-shielding layer 40, the baked layer 50 fuses with the second glass plate 20 via the light-shielding layer 40.

Upon the fusing of the baked layer 50 and the second glass plate 20, tensile stress gets generated in the baked layer 50 as indicated by the arrows in FIG. 5. The tensile stress is generated in the baked layer 50 because the physical properties of the baked layer 50, the light-shielding layer 40, and the second glass plate 20 are different from one another. The linear expansion coefficient is one example of the main physical properties.

The linear expansion coefficient α2 of the baked layer 50 is greater than the linear expansion coefficient α1 of the light-shielding layer 40 and is also greater than the linear expansion coefficient α0 of the second glass plate 20 (α2 > α1 > α0). The cooling process after baking causes the baked layer 50 to contract substantially more than the light-shielding layer 40 and second glass plate 20. As a result, tensile stress gets generated in the baked layer 50.

α2 is the average linear expansion coefficient at a temperature of 20°C to 350°C. α2 is, for example, 12 × 10⁻⁶ / °C to 20 × 10⁻⁶ / °C, and preferably 15 × 10⁻⁶ / °C to 19 × 10⁻⁶ / °C.

When tensile stress is generated in advance in the baked layer 50, cracks tend to form in the baked layer 50 at the time of collision between the automobile 100 and the person 200. The formed crack progresses through the baked layer 50 and the light-shielding layer 40 and progresses beyond the fourth layer 22 of the second glass plate 20 to which the baked layer 50 has been fused. It is easier for the crack to spread rather than to form. Therefore, the second glass plate 20 readily breaks.

The fact that the surface roughness of the baking layer 50 is greater than the surface roughness of the second glass plate 20 is another factor that contributes to baked layer 50 reducing the strength of the second glass plate 20. When the glass powder is heated, the glass powder bonds together, resulting in a multi-porous structure. Therefore, the surface roughness of the baked layer 50 is greater than the surface roughness of the second glass plate 20.

Although the surface roughness of the baked layer 50 is preferably greater than the surface roughness of the light-shielding layer 40, the surface roughness of the baked layer 50 may be approximately the same as the roughness surface of the light-shielding layer 40. The surface roughness of the baked layer 50 is, for example, 500 nm to 800 nm, and preferably 600 nm to 800 nm.

Since the surface roughness of the baked layer 50 is greater than the surface roughness of the second glass plate 20, large defects get formed on the fourth surface 22 upon the forming of the baked layer 50 on the fourth surface 22 of the second glass plate 20. When the defects are large, stress tends to concentrate at the time of the collision, and thus cracks readily form. Therefore, the second glass plate 20 readily breaks.

It is advantageous to form the baked layer 50 in a region of the second glass plate 20 that is relatively hard to break. The region of the second glass plate 20 that is relatively hard to break is the first region A1 and the third region A3. Both the first region A1 and the third region A3 are regions where plane compressive stress is generated.

The baked region 50 is provided so as to be stacked in at least one of the first region a1 or the third region A3. In a case where the edge compression, i.e, the E/C, is 20 MPa or more, the baked layer 50 is provided so as to be stacked in the first region A1 as illustrated in FIG. 6, FIG. 8, and FIG. 10. In the case where the E/C is 20 MPa or more, defects such as processing scratches that exist on the peripheral edge of the second glass plate 20 are unlikely to spread out. When the baked layer 50 is provided so as to be stacked in the first region A1, the portion in the first region A1 readily breaks as intended.

In a case where the baked layer 50 is provided so as to be stacked in the first region A1, the E/C is preferably 10 MPa or more. In a case where the baked layer 50 is provided so as to be stacked in the first region A1, the E/C is preferably 20 MPa or less.

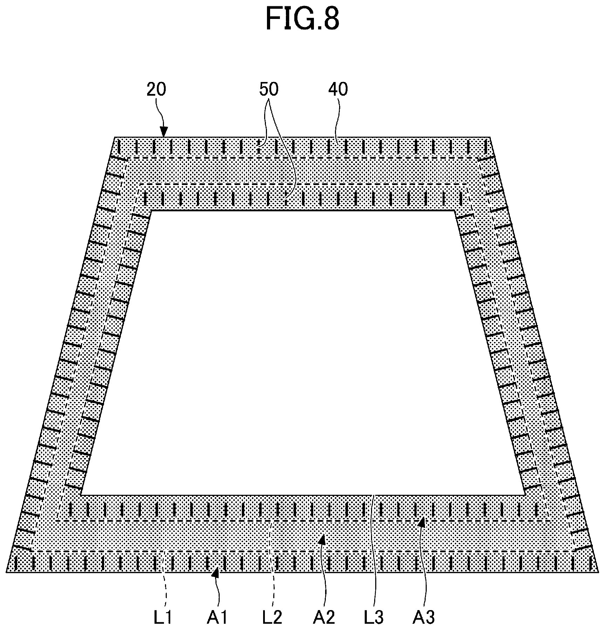

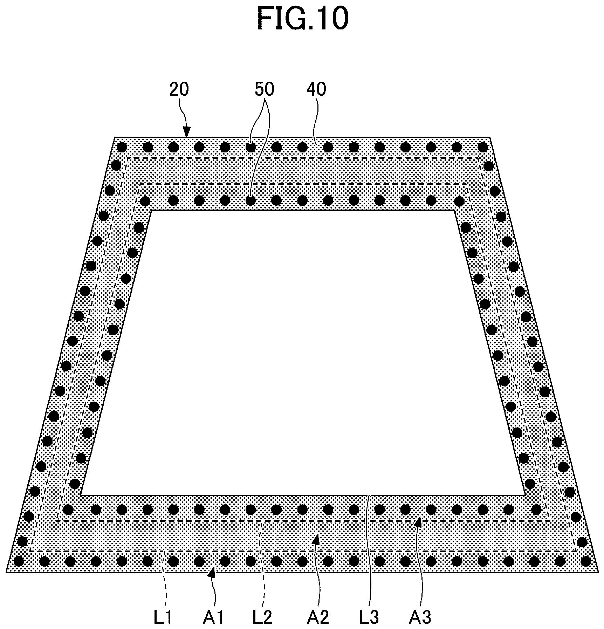

The baked layer 50 provided in the first region A1, may be frame shaped as illustrated in FIG. 6, may be linear shaped and perpendicular to the peripheral edge of the fourth surface 22 as illustrated in FIG. 8, or may be dot-shaped as illustrated in FIG. 10. As illustrated in FIG. 8 and FIG. 10, multiple the baked layers 50 being linear shaped or dot shaped may be provided at intervals along the peripheral edge of the fourth surface 22.

In a case where the edge compression, i.e, the E/C, is 20 MPa or more, it is preferable that the baked layer 50 is provided so as to be stacked in both the first region A1 and the third region A3, as illustrated in FIG. 6, FIG. 8, and FIG. 10. The third region A3, unlike the first region A1, does not generate processing scratches where the breaking starts. A processing scratch is what occurs during, for example, the chamfering processing. When the baked layer 50 is provided so as to be stacked in the third region A3, the portion in the third region A3 readily breaks as intended.

The baked layer 50 provided in the third region A3, may be frame shaped as illustrated in FIG. 6, may be linear shaped and perpendicular to the peripheral edge of the fourth surface 22 as illustrated in FIG. 8, or may be dot shaped as illustrated in FIG. 10. As illustrated in FIG. 8 and FIG. 10, multiple the baked layers 50 being linear shaped or dot shaped may be provided at intervals along the peripheral edge of the fourth surface 22.

The shape of the baked layer 50 provided in the first region A1 and the shape of the baked layer 50 provided in the third region A3 may be the same or may be different from each other. For example, the baked layer 50 provided in the first region A1 may be frame shaped and the baked layer 50 provided in the third region A3 may be dot shaped. The combination of shapes is not particularly limited.

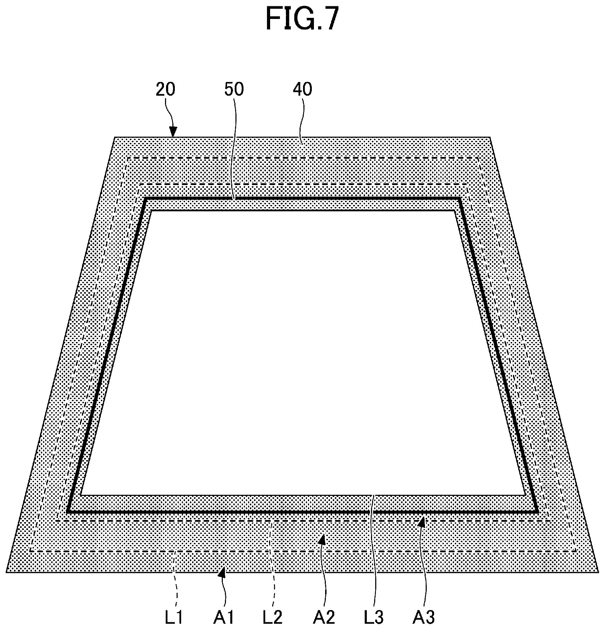

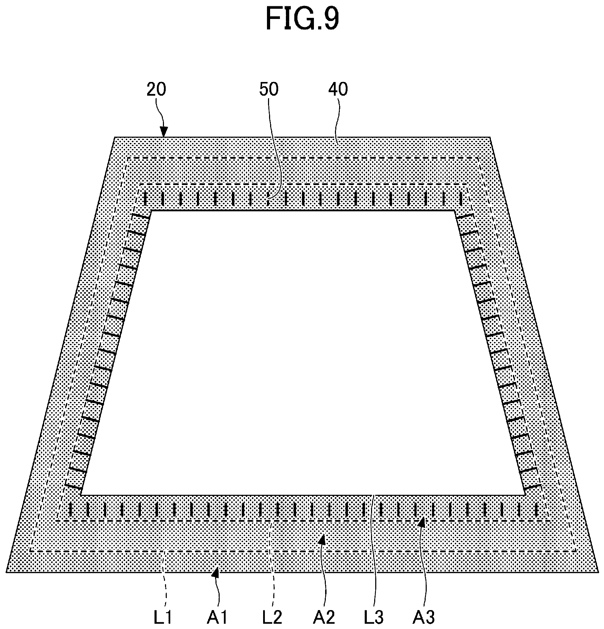

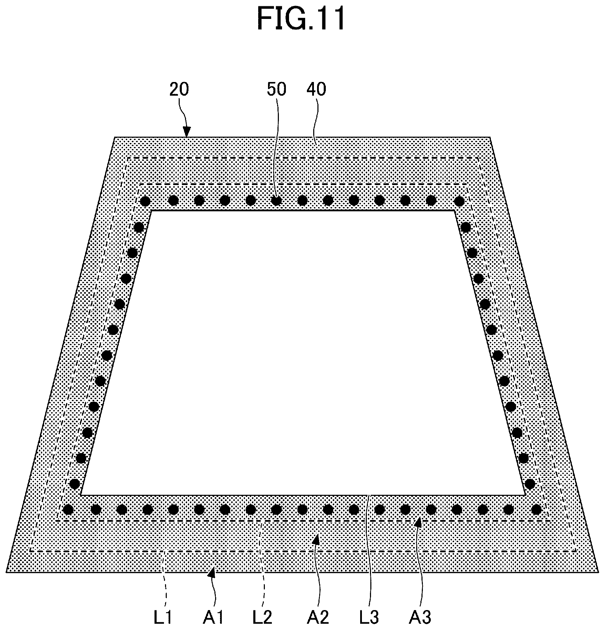

In contrast to the above, in a case where the edge compression, i.e., the E/C, is less than 20 MPa, it is preferable that the baked layer 50 is provided so as to be stacked in only the third region A3 among the first region A1 and the third region A3, as illustrated in FIG. 7, FIG. 9, and FIG. 11. Even in the case where the E/C is less than 20 MPa, an appropriate durability is obtained as long as the baked layer 50 is not stacked in the first layer A1.

In the case where the baked layer 50 is not stacked in the first region A1, the E/C is preferably 15 MPa or less. In the case where the baked layer 50 is not stacked in the first region A1, the E/C is preferably 8 MPa or more.

Preferably, the baked region 50 is provided so as to be stacked in at least one of the first region A1 or the third region A3 yet stacked in the second region A2, as illustrated in FIG. 6 to 11. The second region A2 is a region where plane tensile stress is generated. An appropriate durability is obtained owing to the baked layer 50 not being stacked in the second region A2.

There are cases where a non-illustrated antenna is provided on the fourth surface 22 of the second glass plate 20. The antenna is provided on the upper edge or an upper half of a side edge(s) of the third region A3 of the fourth surface 22, for example. In such a case, the baked layer 50 may be provided on lower edge or a lower half of the side edge(s) of the third region A3 of the fourth surface 22, for example, so as not to interfere with the antenna.

The length of the baked layer 50 may be such that the length is not an integer multiple of a 1/4 wavelength of a radio wave as described below in (1) to (8). The baked layer 50 can prevent resonance with radio waves in the frequency bands (1) to (8).
(1) Frequencies: 76 MHz to 108 MHz (Wavelengths: 2.78 m to 3.94 m)
(2) Frequencies: 170 MHz to 240 MHz (Wavelengths: 1.25 m to 1.76 m)
(3) Frequencies: 470 MHz to 710 MHz (Wavelengths: 422.24 mm to 637.87 mm)
(4) Frequency: 760 MHz (Wavelength: 394.46 mm)
(5) Frequency: 5.9 GHz (Wavelength: 50.81 mm)
(6) Frequencies: 700 MHz to 900 MHz (Wavelengths: 333.10 mm to 428.27 mm)
(7) Frequencies: 1.7 GHz to 2.7 GHz (Wavelengths: 111.03 mm to 176.35 mm)
(8) Frequencies: 3.4 GHz to 3.8 GHz (Wavelengths: 78.89 mm to 88.174 mm)

(1) is for FM, (2) is for Digital Audio Broadcast (DAB), (3) is for DTV, (4) is for Intelligent Transport Systems (ITS), (5) is for vehicle-to-vehicle communication and road-to-vehicle communication, i.e., Vehicle-to-Everything (V2X), and (6) to (8) are for mobile phones.

The light-shielding layer 40 and the baked layer 50, as described above, may be provided on the second surface 12 of the first glass plate 10 and may be provided between the first glass plate 10 and the interlayer film 30. There are cases where a non-illustrated heater is provided on the second surface 12 of the first glass plate 10. The heater, for example, heats where the wipers stop to melt snow or ice. The heater is provided on a lower edge or a side edge(s) of the third region A3 of the second surface 12, for example. In such a case, the baked layer 50 may be provided on an upper edge of the third region A3 of the second surface 12, for example, so as not to interfere with the heater.

The laminated glass for automobile windows, the automobile, and the method for producing laminated glass for automobile windows of the present disclosure have been described above. However, the present disclosure is not limited to the embodiments above. Various modifications, changes, substitutions, additions, deletions, or any combination of the embodiments can be made within the scope set forth in the present disclosure. These are naturally considered as contained within the technical scope of the present disclosure.

The present application claims priority under Japanese Patent Application No. 2021-071144 that was filed to the Japan Patent Office on April 20, 2021, the entire contents of which are incorporated herein by reference.

### Description of the Reference Signs

- 1: Laminated glass for automobile windows
- 10: First glass plate
- 20: Second glass plate
- 30: Interlayer film
- 40: Light-shielding layer
- 50: Baked layer
- A1: First region
- A2: Second region
- A3: Third region

## Claims

1. Laminated glass for automobile windows comprising:
a first glass plate;
an interlayer film; and
a second glass plate in this order from a vehicle-exterior side to a vehicle-interior side,
wherein a light-shielding layer formed by baking a dark pigment and glass powder and a baked layer formed by baking metal powder and glass powder are stacked in this order on a vehicle-interior side surface of either the first glass plate or the second glass plate,
the light-shielding layer is provided along a peripheral edge of either the first glass plate or the second glass plate,
the first glass plate or the second glass plate includes
a first region in which plane compressive stress is generated,
a second region in which plane tensile stress is generated, and
a third region in which plane compressive stress is generated in this order from the peripheral edge toward an inner side, and
the baked layer is provided so as to be stacked in at least one of the first region or the third region.

2. The laminated glass for automobile windows according to claim 1, wherein the baked layer is provided so as to be stacked in at least one of the first region or the third region and so as not to be stacked in the second region.

3. The laminated glass for automobile windows according to claim 1, wherein in a case where the plane compressive stress in the peripheral edge of the first region is 20 MPa or more, the baked layer is provided so as to be stacked in both the first region and the third region.

4. The laminated glass for automobile windows according to claim 1, wherein in a case where the plane compressive stress in the peripheral edge of the first region is less than 20 MPa, the baked layer is provided so as to be stacked in only the third region among the first region and the third region.

5. The laminated glass for automobile windows according to claim 1, wherein the light-shielding layer and the baked layer are stacked in this order on the vehicle-interior side surface of the first glass plate, and the light-shielding layer and the baked layer are stacked in this order on the vehicle-interior side surface of the second glass plate.

6. An automobile comprising:
the laminated glass for automobile windows of any one of claims 1 to 5; and
a vehicle body that has an opening portion to which the laminated glass for automobile windows is attached.
